# EUROPEAN PATENT SPECIFICATION

(11) **EP 1 717 127 B1**
(45) Date of publication and mention of the grant of the patent: **03.11.2010**
(21) Application number: 06075880.2
(22) Date of filing: 13.04.2006
(51) Int. Cl.: B62D 1/18

(54) **Telescoping steering shaft**
Teleskopische Lenksäule
Colonne de direction télescopique

(30) Priority: 28.04.2005 US 116519; 05.01.2006 US 325921
(43) Date of publication of application: 02.11.2006
(73) Proprietor: Delphi Technologies, Inc., Troy, Michigan 48007 (US)
(72) Inventor: Cymbal, William D., Freeland, MI 48623 (US); Riefe, Richard Kremer, Saginaw, MI 48609 (US)
(74) Representative: Manitz, Finsterwald & Partner GbR

(56) References cited:
- GB-A- 457 660
- GB-A- 1 160 349
- GB-A- 1 217 055
- GB-A- 2 136 928
- GB-A- 2 236 168
- US-A- 3 757 601
- US-A- 5 709 605

## Description

### TECHNICAL FIELD

The invention relates to a telescopically adjustable shaft for a vehicular steering column assembly.

### BACKGROUND OF THE INVENTION

Many vehicles, and automobiles in particular, are provided with a steering column assembly in which the upper portion, which carries the steering wheel, is arranged for longitudinal adjustment to enable selective telescopic positioning of the steering wheel through a limited range. This arrangement has been found to be exceptionally advantageous in accommodating vehicle operators of varying stature. Current production designs of telescoping steering shafts employing multi-tooth splines. A tubular female sleeve surrounds the splined shaft with a plastic over-molded feature there between.

GB-A-1217055 discloses an assembly in accordance with the preamble of claim 1.

### SUMMARY OF THE INVENTION

The invention provides a steering shaft assembly for a vehicle. The steering shaft assembly includes a first shaft extending along an axis of rotation for connection to one of a steering wheel and a steerable element of a vehicle. The steering shaft assembly also includes a second shaft extending along the axis of rotation for connection to the other of the steering wheel and the steerable element of the vehicle. The first shaft and the second shaft at least partially overlap one another along the axis of rotation for telescoping relative movement. The steering shaft assembly also includes a keyway formed in one of the first shaft and the second shaft and extending along and spaced from the axis of rotation. The steering shaft assembly also includes a key connected to the other of the first shaft and the second shaft and slidably positioned in the keyway. The key and the keyway cooperate to couple the first shaft with the second shaft for concurrent rotation and for telescoping movement along the axis of rotation.

### BRIEF DESCRIPTION OF THE DRAWINGS

Advantages of the present invention will be readily appreciated as the same becomes better understood by reference to the following detailed description when considered in connection with the accompanying drawings wherein:
Figure 1 is a fragmentary side view of a portion of a passenger vehicle with parts broken away to illustrate the general location and range of adjustable movement of a steering column assembly made in accordance with a first exemplary embodiment of the invention;
Figure 2 is an exploded view of a limiting device of the first exemplary embodiment of the invention;
Figure 3 is a side view, in partial cross-section, of an upper steering shaft of the first exemplary embodiment of the invention;
Figure 4 is a side view of the upper steering shaft as in Figure 3, but showing a guide head positioned within a receiving chamber and an end mill simultaneously forming a keyway in a lower tubular section and the guide head;
Figure 5 is a view as in Figure 4 yet showing an alternative operation to simultaneously form a keyway in the lower tubular section and the guide head;
Figure 6 is a fragmentary cross-sectional view of the upper steering shaft assembled to the lower steering shaft;
Figure 7 is a cross-sectional view taken along lines 7-7 of Figure 6;
Figure 8 is a cross-sectional view taken along lines 8-8 of Figure 6;
Figure 9 is a fragmentary perspective view of a second exemplary embodiment of the guide head fitted with a key and a delashing spring;
Figure 10 is a fragmentary cross-sectional view of the alternative embodiment according to Figure 9 in an assembled condition;
Figure 11 is a first side cross-sectional view of a third exemplary embodiment of the invention wherein a key with plastic shear rib is being inserted in an outer steering shaft;
Figure 12 is a second side cross-sectional view of the third exemplary embodiment of the invention wherein the key has been inserted in the outer steering shaft and the plastic shear rib has been partially sheared from the key to delash the key with respect to the outer steering shaft; and
Figure 13 is front view of the third exemplary embodiment of the invention wherein the outer steering shaft shown in Figures 11 and 12 has been removed for clarity and an inner steering shaft having a keyway is engaging the key to delash the key with respect to the keyway.

### DESCRIPTION OF THE PREFERRED EMBODIMENTS

A plurality of different embodiments of the invention are shown in the Figures of the application. Similar features are shown in the various embodiments of the invention. Similar features have been numbered with a common two-digit reference numeral and have been differentiated by a third digit placed before the two common digits. Also, to enhance consistency, features in any particular drawing share the same third digit designation even if the feature is shown in less than all embodiments. Similar features are structured similarly, operate similarly, and/or have the same function unless otherwise indicated by the drawings or this specification. Furthermore, particular features of one embodiment can replace corresponding features in another embodiment unless otherwise indicated by the drawings or this specification.

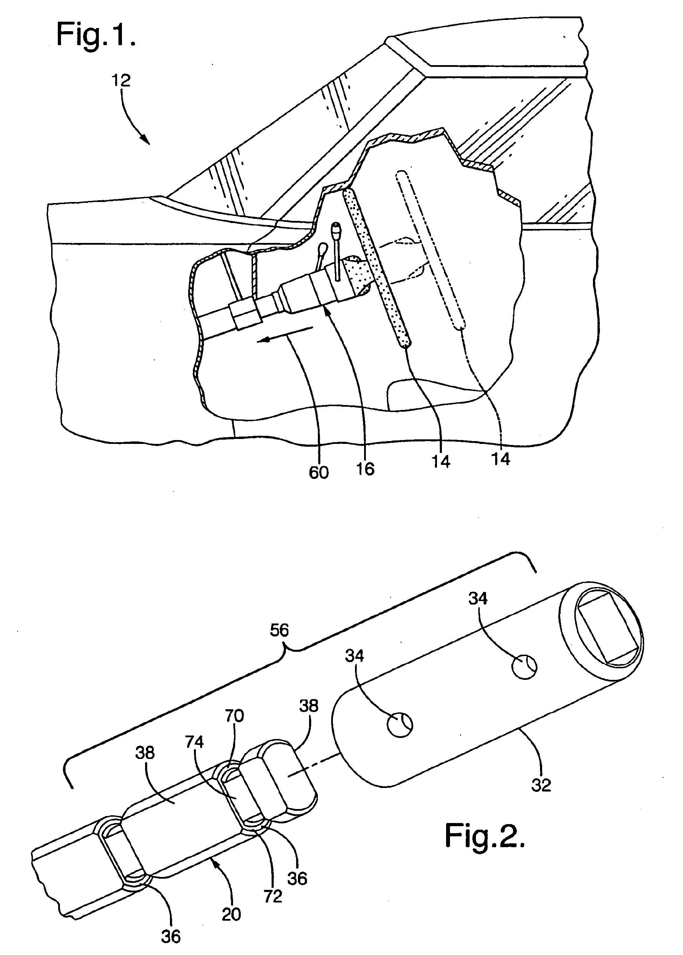

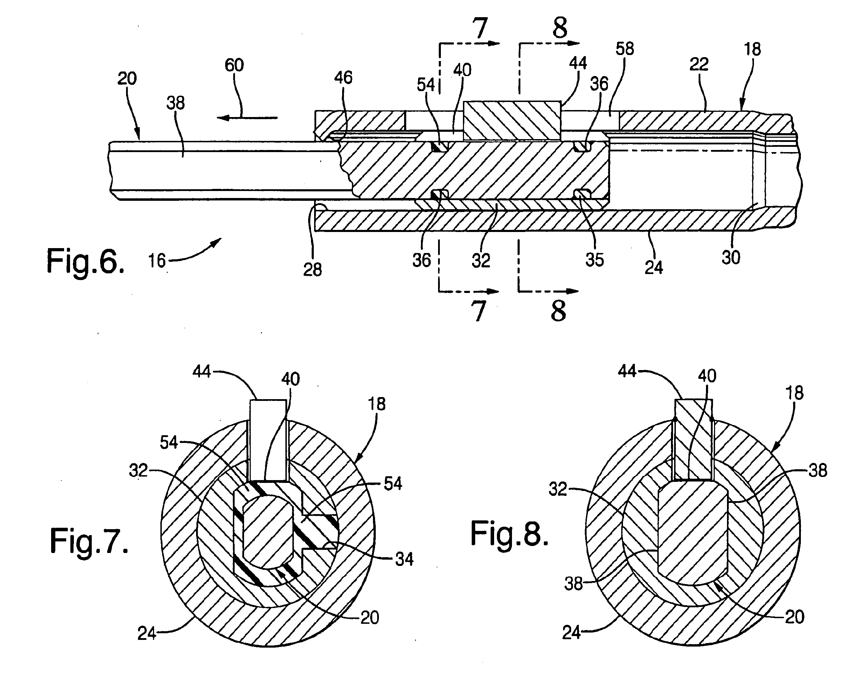

Referring to Figures 1 - 8, a portion of a conventional passenger automobile is generally shown at 12. Although the preferred application of the invention is within the field of automobiles and other road vehicles, the invention can be practiced with equal affect in other vehicular fields, including marine and aeronautic applications, as well as non-vehicular fields. The automobile 12 is shown including a conventional steering wheel 14 supported at the end of a steering shaft assembly 16. A column assembly, such as steering column jackets and/or a tilt housing can enclose the steering shaft assembly 16 from the interior of the vehicle 12. In order to accommodate personal preferences in the positioning of the steering wheel 14, the steering shaft assembly 16 is telescopically adjustable so that the steering wheel 14 can be moved to various axially adjusted positions. Although not a subject of this invention, the steering shaft assembly 16 can be further modified to provide angular adjustment of the steering wheel 14 through any of the know tilt adjust or rake adjust mechanisms.

The steering shaft assembly 16 functions to transmit rotary motion from the steering wheel 14 to the steered element which, in the case of an automobile 12, usually comprises the two front wheels. However, in marine applications, the steered element may include a rudder or articulated propulsion unit; in the case of aeronautical applications, the steered element may comprise a rudder or other features. Thus, the novel steering shaft assembly 16 can be deployed in any application in which a steering wheel 14 or other steering grip device is telescopically adjustable.

The steering shaft assembly 16 is comprised of an upper steering shaft, generally indicated at 18. The upper steering shaft 18 can also be referred to as a first shaft 18. The steering shaft assembly 16 also includes a lower steering shaft, generally indicated at 20. The lower steering shaft 20 can also be referred to as a second shaft 20. In the first exemplary embodiment of the invention, the first shaft 18 is operatively connected to the steering wheel 14 while the second shaft 20 is operatively connected (typically through additional controls or linkages) to the steered element. In alternative embodiments of the invention, the first shaft 18 can be operatively connected to the steered element while the second shaft 20 can be operatively connected (typically through additional controls or linkages) to the steering wheel 14.

The first and second shafts 18, 20 at least partially overlap and extend along a longitudinal axis A which is coincident with the turning axis of the steering wheel 14. The first and second shafts 18, 20 are engaged for telescopic movement relative to one another. The first shaft 18 includes an upper tubular section 22 and a lower tubular section 24. A traditional coupling feature 26 is carried on the end of the upper tubular section 22 for attaching the steering wheel 14. The coupling feature may include splines and/or tapers, together with threaded fastening elements, to securely attach the steering wheel 14. The lower tubular section 24 presents, at its open end, an axially extending receiving chamber 28. The receiving chamber 28 is preferably formed in a precision machining operation which includes drilling, reaming, and honing to very precise tolerances for proper mating engagement with the second shaft 20. The interface between the upper 22 and lower 24 tubular sections results in a narrowing of the interior region of the first shaft 18 and forms an internal step 30 whose purpose is described below.

The first exemplary embodiment of the invention also includes a limiting device 56. The limiting device 56 is operably disposed to limit relative telescoping movement between the first shaft 18 and the second shaft 20. The second shaft 20 includes a guide head 32 of the limiting device. The guide head 32 is disposed radially between the first shaft 18 and the second shaft 20 with respect to the axis (A) of rotation in the receiving chamber 28. The guide head 32 is releasibly connected to the second shaft 20. As best shown in Figure 2, the guide head 32 is a generally tubular member which slips over the end of the second shaft 20 and is secured with a plastic sheer material 54 introduced through side injection ports 34. The exemplary second shaft 20 is formed with a double truncated circular cross-section, such that a pair of opposing flats 38 interrupt an otherwise cylindrical exterior configuration. The guide head 32 is shaped to mate over the second shaft 20 so that rotary motion can be transmitted directly between the two components. During the assembly process, when the guide head 32 is in position over the end of the second shaft 20, the injection ports 34 align with injection grooves 36 machined into the second shaft 20. Once the fluidic plastic material 54 has solidified and become a locking member 54, the guide head 32 is securely affixed in an operative position to the second shaft 20. The annular groove 36 includes first and second arcuate portions 70, 72 and at least one straight portion 74 disposed between the first and second arcuate portions 70, 72 to reduce the likelihood of relative rotation between the second shaft 20 and the guide head 32. Like the receiving chamber 28, the guide head 32 is also precision machined to a surface finish and dimensional tolerance that allows a smooth axially slideable engagement into the receiving chamber 28.

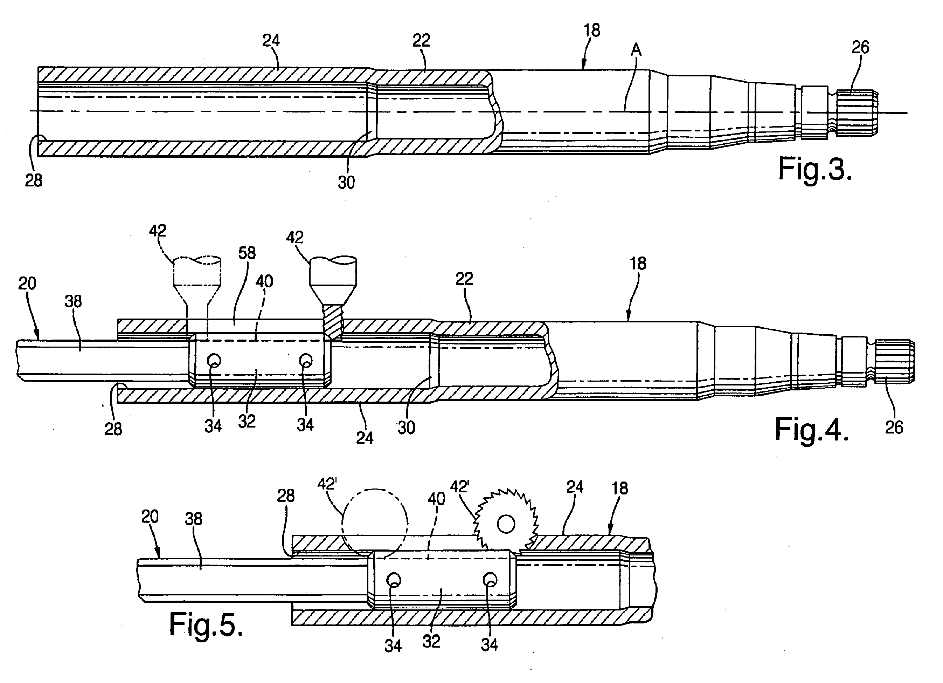

Referring to Figure 4, a step in the assembly operation of the first exemplary embodiment of the invention is illustrated by the simultaneous forming of an axially extending keyway 40 through the guide head 32 (which is fixed to the second shaft 20) and a slot 58 through the lower tubular section 24. With the guide head 32 in a generally central position along the length of the receiving chamber 28, a common tool, such as an end mill 42, is used to machine the keyway 40 and slot 58. The keyway 40 has a length that fully traverses fully the length of the guide head 32 to increase the likelihood of a full running length of keyway 40 through the guide head 32. Once the keyway 40 has been thus formed, the end mill 42 is retracted and the components disassembled and deburred.

Those skilled in the art will appreciate that other machining techniques can be used to form the keyway 40. As one example of many possible alternatives, Figure 5 illustrates a cutting wheel 42' which can be used to form the keyway 40 and the slot 58. The particular type of machining operation is not critical. By simultaneously forming the keyway 40 through the guide head 32 and the slot 58 through the lower tubular section 24 using the same cutting tool 42, the keyway 40 achieves exactly the same width in both parts.

After the deburring operation, the guide head 32 is reinserted into the receiving chamber 28 and a key 44 positioned within the keyway 40 and the slot 58. By welding or other fixation technique, the key 44 is securely joined to the lower tubular section 24. Once the welding (or other fastening) operation is completed, the lower tubular section 24 is staked or otherwise modified on its distal, open end to create a lower stop 46 at the end of the keyway 40 to prevent disassembly. The internal step 30 forms an upper stop 30 and one limit of travel for the guide head 32 within the receiving chamber 28. Thus, during telescoping adjustment of the steering wheel 14, the first shaft 18 moves over the second shaft 20 within a first range of telescoping movement defined by the guide head 32 abutting either the upper stop 30 or the lower stop 46. All the while, the key 44 remains in registry with the keyway 40 in the guide head 32 which enables rotary motion to be transmitted between the first shaft 18 and the second shaft 20. A suitable clamping mechanism, not shown but of any conventional design, secures the first shaft 18 in an adjusted position. Release of the clamping mechanism allows readjustment of the axial position of the steering wheel 14.

In the event of an overwhelming compressive force applied against the steering wheel 14, such as might occur in a collision, the steering shaft assembly 16 is designed to collapse in a controlled manner. In such an emergency, the first shaft 18 will be pressed against the second shaft 20 in a direction 60. Assuming that the telescoping clamp mechanism has been overcome or released, the first shaft 18 will continue sliding over the second shaft 20 until the guide head 32 reaches the upper stop 30. At this point, an overwhelming force will cause the plastic locking member 54 interconnecting the guide head 32 to the second shaft 20 through the injection grooves 36 to shear. At this catastrophic failure point, the second shaft 20 may continue traveling into the hollow regions of the upper tubular section 22, i.e., past the upper stop 30, while the guide head 32 remains in the receiving chamber 28. During the series of events, external energy absorbing devices or other collision and safety mechanisms can be deployed. Movement of the second shaft without the guide head 32 defines a second range of telescoping movement in the form of collapsing telescoping movement.

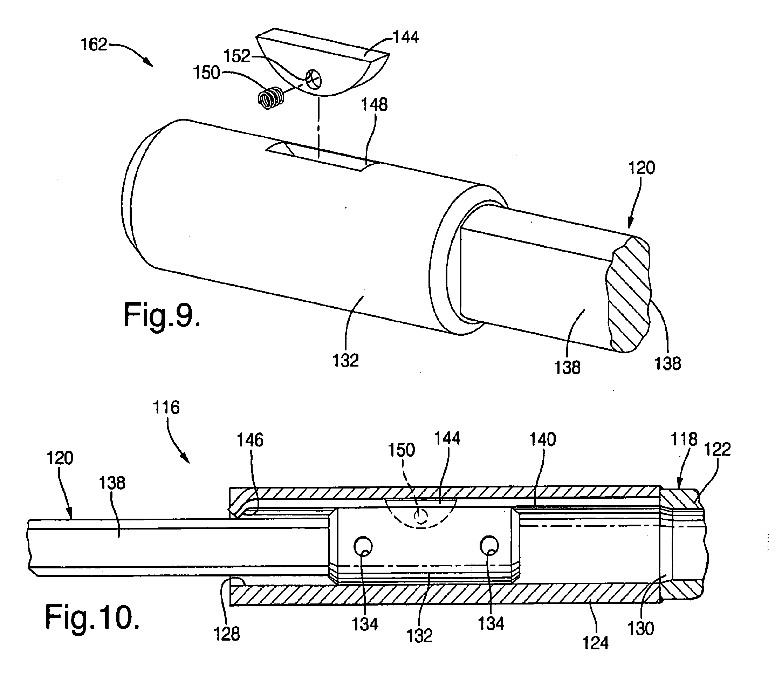

Figures 9 and 10 show a second embodiment of the invention. This alternative design is characterized by the key 144 being fixed relative to the guide head 132 and slideable in a keyway 140 formed internally in the receiving chamber 128. Here, the guide head 132 includes a key slot 148 into which the key 144 is seated. A delashing spring 150 may be positioned between the key slot 148 and the key 144 to minimize torsional lash. Although the delashing spring 150 is shown for illustrative purposes as a compression spring seated in a pocket 152 in the side of the key 144, the delashing spring 150 may take alternative forms, including a formed leaf spring, a torsion spring, or any other type of biasing element.

The keyway 140 is finely machined into the receiving chamber 128 to provide appropriate sliding tolerances with the key 144. To facilitate formation of the keyway 140, the upper tubular section 122 can be formed separately from the lower tubular section 124, and the two components later joined in a subsequent operation to form the complete upper steering shaft 118. For example, the separately formed upper 122 and lower 124 tubular sections can be friction welded, traditionally welded, induction welded, threaded and pinned, or any other type of joining operation which does not interfere with the movement of the guide head 132 within the receiving chamber 128 to the full limits of the upper stop 130 nor of the necessary continued travel of the lower steering shaft 120 into the upper tubular section 122 in the event of a catastrophic event.

After installing the key 144 into the guide head 132 and inserting this subassembly into the lower tubular section 124, the receiving chamber 128 is staked at the end of the keyway 140 to prevent disassembly of the two components. Thus, like in the preceding embodiment, the alternative embodiment of Figures 9 and 10 functions to allow free telescoping movement of the upper steering shaft 118 relative to the lower steering shaft 120 while transmitting rotary motion therebetween.

A column assembly manufactured according to these designs and techniques is low in cost relative to existing designs, and at the same time is strong and exhibits good telescoping loads. The individual components are relatively easy to manufacture with relatively few surfaces requiring precision machining. The design also accommodates catastrophic impact scenarios in that once the guide head 32, 132 reaches the upper stop 30, 130, the injected plastic 54 sheers so that the second shaft 20, 120 translates into the non-machine area of upper tubular section 22, 122.

Lashing occurs between two components that are intended to concurrently rotate when one of the components rotates slightly relative to the other component. The first shaft 18, the second shaft 20, the keyway 40, and the key 44 are intended to concurrently rotate in the exemplary embodiments of the invention. In the first exemplary embodiment of the invention, the key 44 is delashed with respect to the first shaft 18 by welding the key 44 to the slot 58. The key 44 is delashed with respect to the keyway 40 (as well as the second shaft 20 since the keyway 40 is formed in the guide head 32 and the guide head 32 is fixed to the second shaft 20 during normal vehicle handling) by sizing the key 44 to fit the keyway 40 after the keyway 40 has been formed.

The second and third embodiments of the invention include delashing devices 162, 262, 264 to delash the respective keys 144, 244 with respect to one of the keyways 140, 240, the first shafts 118, 218, and the second shaft 120, 220 to limit relative movement about the axis A of rotation. In the second embodiment of the invention shown in Figures 9 and 10, the delashing device 162 limits relative movement between the key 144 and the second shaft 120 about the axis A of rotation. The delashing device is a spring 150 directly disposed between the key 144 and the second shaft 120. The spring 150 urges a portion of the key 144 (the bottom of the pocket 152) and a portion of the second shaft 120 (the interior of the slot 148) apart.

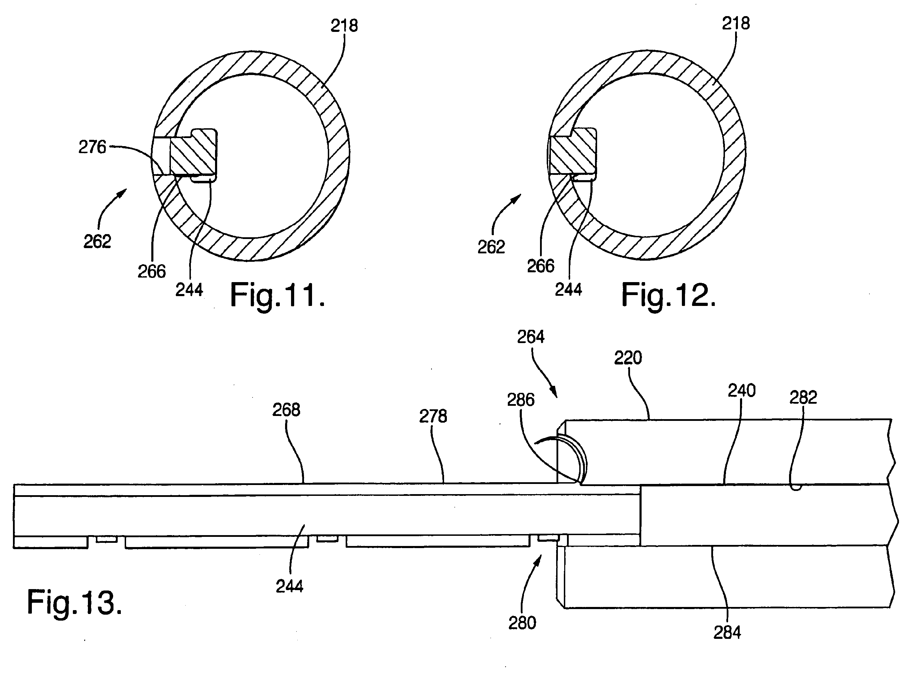

In the third embodiment of the invention shown in Figures 11-13, the delashing device 262 is operably disposed to limit relative movement between the key 244 and the first shaft 218 about the axis A of rotation. The delashing device 262 is a plastic shear rib 266 at least partially sheared from the key 244 by the first shaft 218. The key 244 is formed with plastic material and with the plastic shear rib 266. The key 244 is inserted in a slot 276 formed by the first shaft 218. During insertion of the key 244 in the slot 276, at least part of the plastic shear rib 266 is sheared from the key 244 by the first shaft 218. The portion of the plastic shear rib 266 that is not sheared off is disposed between the key 244 and the first shaft 218 and takes up any slack between the key 244 and the first shaft 218 that could allow lash.

Any embodiment of the invention could include more than one delashing device. The third embodiment of the invention includes delashing devices 262, 264. The delashing device 262, 264 are integrally formed with the key 244. The delashing device 264 limits relative movement between the key 244 and the keyway 240 about the axis A of rotation. The delashing device is a plastic shear rib 268 at least partially sheared from the key 244 by the keyway 240. The key 244 is formed with plastic material and with the plastic shear rib 268 having a ramp 278. The ramp 278 is angled at five (5) degrees in the third exemplary embodiment of the invention. The base or bottom of the ramp 278 is disposed at the right-hand of the key 244 with respect to Figure 13. The ramp 278 extends and increases in height to the left end of the key 244. The keyway 240 is formed with an opening 280 having first and second sides 282, 284. A cutting edge 286 is defined at the first side 282. The cutting edge 286 is positioned on the ramp 278 adjacent the base to insert the key 244 in the keyway 240. At least one of the first shaft 218 and the second shaft 220 is moved relative to the other along the axis A of rotation. For example, the second shaft 220 can be moved to the left with respect to Figure 13 as the key 244 remains stationary. During this movement, the cutting edge 286 moves up the ramp 278 some distance. The cooperation between the cutting edge 286 and the ramp 278 is cam - cam-follower like. For example, during the moving step the cutting edge 286 urges the ramp 278 and the key 244 against the second side 284 of the keyway 240 to substantially eliminate any slack or gaps that could lead to lash. During this cooperative action, the first and second shafts 218, 220 can rotate relative to one another. At some point during movement up the ramp 278, the key 244 is urged against the second side 284 to the furthest extent and the cutting edge 286 will then bite into the ramp 278. The cutting edge 286 then shears at least part of the second plastic shear rib 268 from the key 244. The delashing device 264 allows for a custom fit of the key 244 in the keyway 240.

## Claims

1. A steering shaft assembly (16, 116) comprising:
a first shaft (18, 118, 218) extending along an axis (A) of rotation for connection to one of a steering wheel (14) and a steerable element of a vehicle (12);
a second shaft (20, 120, 220) extending along said axis (A) of rotation for connection to the other of the steering wheel (14) and the steerable element of the vehicle (12), wherein said first shaft (18, 118, 218) and said second shaft (20, 120, 220) at least partially overlap one another along said axis (A) of rotation for telescoping relative movement;
a keyway (40, 140, 240) formed in one of said first shaft (18, 118, 218) and said second shaft (20, 120, 220) and extending along and spaced from said axis (A) of rotation; and
a key (44, 144, 244), wherein said key (44, 144, 244) and said keyway (40, 140, 240) cooperate to couple said first shaft (18, 118, 218) with said second shaft (20, 120, 220) for concurrent rotation and for telescoping movement along said axis (A) of rotation;
**characterized in that**
the key (44, 144, 244) is connected to the other of said first shaft (18, 118, 218) and said second shaft (20, 120, 220) and is slidably positioned in said keyway (40, 140, 240).

2. The steering shaft assembly (16, 116) of claim 1 further comprising:
a first delashing device (162, 262, 264) operably disposed to limit relative movement between said key (44, 144, 244) and one of said keyway (40, 140, 240), said first shaft (18, 118, 218), and said second shaft (20, 120, 220) about said.axis (A) of rotation.

3. The steering shaft assembly (16, 116) of claim 2 wherein said first delashing device (162, 262, 264) limits relative movement between said key (44, 144, 244) and said second shaft (20, 120, 220) about said axis (A) of rotation and is a spring (150) directly disposed between said key (44, 144, 244) and said second shaft (20, 120, 220) and urging a portion of said key (44, 144, 244) and a portion of said second shaft (20, 120, 220) apart.

4. The steering shaft assembly of claim 2 wherein said first delashing device (262) limits relative movement between said key (244) and said first shaft (218) about said axis (A) of rotation and is a plastic shear rib (266) at least partially sheared from said key (244) by said first shaft (218) on insertion of the key (244) in a slot (276) in the first shaft (218).

5. The steering shaft assembly of claim 2 wherein said first delashing device (264) limits relative movement between said key (244) and said keyway (240) about said axis (A) of rotation and is a plastic shear rib (268) at least partially sheared from said key (244) by said keyway (240) on insertion of the key (244) in the keyway (240).

6. The steering shaft assembly of claim 2 further comprising:
a second delashing device (262, 264) operably disposed to limit relative movement between said key (244) and another of said keyway (240), said first shaft (218), and said second shaft (220) about said axis (A) of rotation.

7. The steering shaft assembly of claim 6 wherein said first delashing device (262) limits relative movement between said key (244) and said first shaft (218) about said axis (A) of rotation and is a first plastic shear rib (266) at least partially sheared from said key (244) by said first shaft (218) on insertion of the key (244) in a slot (276) in the first shaft (218).

8. The steering shaft assembly of claim 7 wherein said second delashing device (264) limits relative movement between said key (244) and said keyway (240) about said axis (A) of rotation and is a second plastic shear rib (268) at least partially sheared from said key (244) by said keyway (240) on insertion of the key (244) in the keyway (240).

9. The steering shaft assembly of claim 6 wherein said first delashing device (262) and said second delashing device (264) are integrally formed with said key (244).

10. The steering shaft assembly (16, 116) of claim 1 further comprising:
a limiting device (56) operably disposed to limit relative telescoping movement between said first shaft (18, 118, 218) and said second shaft (20, 120, 220).

11. The steering shaft assembly (16, 116) of claim 10 wherein said limiting device (56) further comprises:
a guide head (32) disposed radially between said first shaft (18, 118) and said second shaft (20, 120,) with respect to said axis (A) of rotation and releasibly connected to one of said first shaft (18, 118,) and said second shaft (20, 120,).

12. The steering shaft assembly (16, 116) of claim 11 wherein said guide head (32) is further defined as being releasibly connected to said second shaft (20, 120,) and said limiting device (56) further comprises:
an injection port (34) extending through said guide head (32);
an annular groove (36) formed around said second shaft (20, 120) and aligned with said injection port (34); and
a locking member (54) formed from plastic and formed in situ in said injection port (34) and said annular groove (36).

13. The steering shaft assembly (16, 116) of claim 12 wherein said annular groove (36) includes first and second arcuate portions (70, 72) and at least one straight portion (74) disposed between said first and second arcuate portions (70, 72).

14. A method for forming a steering shaft assembly (16, 116) comprising the steps of:
extending a first shaft (18, 118, 218) along an axis (A) of rotation for connection to one of a steering wheel (14) and a steerable element of a vehicle (12);
extending a second shaft (20, 120, 220) along the axis (A) of rotation for connection to the other of the steering wheel (14) and the steerable element of the vehicle (12), wherein the first shaft (18, 118, 218) and the second shaft (20, 120, 220) at least partially overlap one another along the axis (A) of rotation for telescoping relative movement;
forming a keyway (40, 140, 240) extending along and spaced from the axis (A) of rotation in one of the first shaft (18, 118, 218) and the second shaft (20, 120, 220); and
connecting a key (44, 144, 244) slidably positioned in the keyway (40, 140, 240) to the other of the first shaft (18, 118, 218) and the second shaft (20, 120, 220) wherein the key (44, 144, 244) and the keyway (40, 140, 240) cooperate to couple the first shaft (18, 118, 218) with the second shaft (20, 120, 220) for concurrent rotation and for telescoping movement along the axis (A) of rotation.

15. The method of claim 14 further comprising the step of:
delashing the key (44, 144, 244) with respect to one of: the keyway (40, 140, 240), the first shaft (18, 118, 218), and the second shaft (20, 120, 220), to limit relative movement about the axis (A) of rotation.

16. The method of claim 15 wherein said delashing step is further defined as delashing the key (44) with respect to the first shaft (18) and comprises the steps of
forming a slot (58) in said first shaft (18) concurrently with said forming the keyway step in the second shaft (20) with a common tool;
positioning the key (44) in the slot (58) and in the keyway (40); and
welding the key (44) to the slot (58).

17. The method of claim 15 wherein said delashing step is further defined as delashing the key (244) with respect to the first shaft (218) and comprises the steps of:
forming the key (244) with plastic material and with a first plastic shear rib (266);
inserting the key (244) in a slot (276) formed by the first shaft (218); and
shearing at least part of the first plastic shear rib (266) from the key (244) during said inserting step with the first shaft (218).

18. The method of claim 15 wherein said delashing step is further defined as delashing the key (244) with respect to the keyway (240) and comprises the steps of:
forming the key (244) with plastic material and with a second plastic shear rib (268) having a ramp (278);
forming the keyway (240) with an opening (280) having first and second sides (282, 284) and a cutting edge (286) at the first side (282);
positioning the cutting edge (286) on the ramp (278) to insert the key (244) in the keyway (240);
moving at least one of the first shaft (218) and the second shaft (220) relative to the other along said axis (A) of rotation;
directing the cutting edge (286) up the ramp (278) during said moving step to urge the key (244) against the second side (284) of the keyway (240); and
shearing at least part of the second plastic shear rib (268) from the key (244) with the cutting edge (286) during said moving step and after said directing step.

19. The method of claim 14 further comprising the step of:
dividing the relative telescoping movement into first and second ranges of telescoping movement with a limiting device (56) disposed radially between the first shaft (18, 118) and the second shaft (20, 120) with respect to the axis (A) of rotation wherein the first range corresponds to adjusting telescoping movement and the second range corresponds to collapsing movement.

## Patentansprüche

1. Lenkwellenanordnung (16, 116), umfassend:
eine erste Welle (18, 118, 218), die sich entlang einer Drehachse (A) zur Verbindung mit einem von einem Lenkrad (14) und einem lenkbaren Element eines Fahrzeugs (12) erstreckt;
eine zweite Welle (20, 120, 220), die sich entlang der Drehachse zur Verbindung mit dem anderen von dem Lenkrad (14) und dem lenkbaren Element des Fahrzeugs (12) erstreckt, wobei die erste Welle (18, 118, 218) und die zweite Welle (20, 120, 220) einander zumindest teilweise entlang der Drehachse (A) für eine relative Ineinanderschiebebewegung überlappen;
eine Keilnut (40, 140, 240), die in einer von der ersten Welle (18, 118, 218) und der zweiten Welle (20, 120, 220) gebildet ist und sich entlang der Drehachse (A) erstreckt und von dieser beabstandet ist; und
einen Keil (44, 144, 244), wobei der Keil (44, 144, 244) und die Keilnut (40, 140, 240) zusammenwirken, um die erste Welle (18, 118, 218) mit der zweiten Welle (20, 120, 220) für eine gleichzeitige Rotation und für eine Ineinanderschiebebewegung entlang der Drehachse (A) zu koppeln;
**dadurch gekennzeichnet, dass**
der Keil (44, 144, 244) mit der anderen von der ersten Welle (18, 118, 218) und der zweiten Welle (20, 120, 220) verbunden und in der Keilnut (40, 140, 240) verschiebbar angeordnet ist.

2. Lenkwellenanordnung (16, 116) nach Anspruch 1, ferner umfassend:
eine erste Spielausgleichsvorrichtung (162, 262, 264), die funktional angeordnet ist, um eine Relativbewegung zwischen dem Keil (44, 144, 244) und einer von der Keilnut (40, 140, 240), der ersten Welle (18, 118, 218) und der zweiten Welle (20, 120, 220) um die Drehachse (A) zu begrenzen.

3. Lenkwellenanordnung (16, 116) nach Anspruch 2,
wobei die erste Spielausgleichsvorrichtung (162, 262, 264) eine Relativbewegung zwischen dem Keil (44, 144, 244) und der zweiten Welle (20, 120, 220) um die Drehachse (A) begrenzt und eine Feder (150) ist, die direkt zwischen dem Keil (44, 144, 244) und der zweiten Welle (20, 120, 220) angeordnet ist und einen Abschnitt des Keils (44, 144, 244) und einen Abschnitt der zweiten Welle (20, 120, 220) auseinander drängt.

4. Lenkwellenanordnung nach Anspruch 2,
wobei die erste Spielausgleichsvorrichtung (262) eine Relativbewegung zwischen dem Keil (244) und der ersten Welle (218) um die Drehachse (A) begrenzt und eine Kunststoffscherrippe (266) ist, die von dem Keil (244) durch die erste Welle (218) beim Einsetzen des Keils (244) in einen Schlitz (276) in der ersten Welle (218) zumindest teilweise geschert wird.

5. Lenkwellenanordnung nach Anspruch 2,
wobei die erste Spielausgleichsvorrichtung (264) eine Relativbewegung zwischen dem Keil (244) und der Keilnut (240) um die Drehachse (A) begrenzt und eine Kunststoffscherrippe (268) ist, die von dem Keil (244) durch die Keilnut (240) beim Einsetzen des Keils (244) in die Keilnut (240) zumindest teilweise geschert wird.

6. Lenkwellenanordnung nach Anspruch 2,
ferner umfassend: eine zweite Spielausgleichsvorrichtung (262, 264), die funktional angeordnet ist, um eine Relativbewegung zwischen dem Keil (244) und einer anderen von der Keilnut (240), der ersten Welle (218) und der zweiten Welle (220) um die Drehachse (A) zu begrenzen.

7. Lenkwellenanordnung nach Anspruch 6,
wobei die erste Spielausgleichsvorrichtung (262) eine Relativbewegung zwischen dem Keil (244) und der ersten Welle (218) um die Drehachse begrenzt und eine erste Kunststoffscherrippe (266) ist, die von dem Keil (244) durch die erste Welle (218) beim Einsetzen des Keils (244) in einen Schlitz (276) in der ersten Welle (218) zumindest teilweise geschert wird.

8. Lenkwellenanordnung nach Anspruch 7,
wobei die zweite Spielausgleichsvorrichtung (264) eine Relativbewegung zwischen dem Keil (244) und der Keilnut (240) um die Drehachse (A) begrenzt und eine zweite Kunststoffscherrippe (268) ist, die von dem Keil (244) durch die Keilnut (240) beim Einsetzen des Keils (244) in die Keilnut (240) zumindest teilweise geschert wird.

9. Lenkwellenanordnung nach Anspruch 6,
wobei die erste Spielausgleichsvorrichtung (262) und die zweite Spielausgleichsvorrichtung (264) einstückig mit dem Keil (244) gebildet sind.

10. Lenkwellenanordnung (16, 116) nach Anspruch 1,
ferner umfassend:
eine Begrenzungsvorrichtung (56), die funktional angeordnet ist, um eine relative Ineinanderschiebebewegung zwischen der ersten Welle (18, 118, 218) und der zweiten Welle (20, 120, 220) zu begrenzen.

11. Lenkwellenanordnung (16, 116) nach Anspruch 10, wobei die Begrenzungsvorrichtung (56) ferner umfasst:
einen Führungskopf (32), der radial zwischen der ersten Welle (18, 118) und der zweiten Welle (20, 120) mit Bezug auf die Drehachse (A) angeordnet und lösbar mit einer von der ersten Welle (18, 118) und der zweiten Welle (20, 120) verbunden ist.

12. Lenkwellenanordnung (16, 116) nach Anspruch 11,
wobei der Führungskopf (32) ferner derart definiert ist, dass er lösbar mit der zweiten Welle (20, 120) verbunden ist, und die Begrenzungsvorrichtung (56) ferner umfasst:
eine Einspritzöffnung (34), die sich durch den Führungskopf (32) erstreckt;
eine Ringnut (36), die um die zweite Welle (20, 120) herum gebildet und mit der Einspritzöffnung (34) ausgerichtet ist; und
ein Verriegelungselement (54), das aus Kunststoff gebildet und in situ in der Einspritzöffnung (34) und der Ringnut (36) gebildet ist.

13. Lenkwellenanordnung (16, 116) nach Anspruch 12,
wobei die Ringnut (36) einen ersten und zweiten gebogenen Abschnitt (70, 72) und zumindest einen geraden Abschnitt (74) umfasst, der zwischen dem ersten und zweiten gebogenen Abschnitt (70, 72) angeordnet ist.

14. Verfahren zum Bilden einer Lenkwellenanordnung (16, 116) mit den Schritten, dass:
eine erste Welle (18, 118, 218) entlang einer Drehachse (A) für eine Verbindung mit einem von einem Lenkrad (14) und einem lenkbaren Element eines Fahrzeugs (12) ausgedehnt wird;
eine zweite Welle (20, 120, 220) entlang der Drehachse (A) für eine Verbindung mit dem anderen von dem Lenkrad (14) und dem lenkbaren Element des Fahrzeugs (12) ausgedehnt wird, wobei die erste Welle (18, 118, 218) und die zweite Welle (20, 120, 220) einander zumindest teilweise entlang der Drehachse (A) für eine ineinanderschiebende Relativbewegung überlappen;
eine Keilnut (40, 140, 240) gebildet wird, die sich entlang der Drehachse (A) in einer von der ersten Welle (18, 118, 218) und der zweiten Welle (20, 120, 220) erstreckt und von dieser beabstandet ist; und
ein Keil (44, 144, 244), der in der Keilnut (40, 140, 240) verschiebbar angeordnet wird, mit der anderen von der ersten Welle (18, 118, 218) und der zweiten Welle (20, 120, 220) verbunden wird, wobei der Keil (44, 144, 244) und die Keilnut (40, 140, 240) zusammenwirken, um die erste Welle (18, 118, 218) mit der zweiten Welle (20, 120, 220) für eine gleichzeitige Rotation und für eine Ineinanderschiebebewegung entlang der Drehachse (A) zu koppeln.

15. Verfahren nach Anspruch 14, das ferner den Schritt umfasst, dass:
das Spiel von dem Keil (44, 144, 244) mit Bezug auf eine von der Keilnut (40, 140, 240), der ersten Welle (18, 118, 218) und der zweiten Welle (20, 120, 220) ausgeglichen wird, um eine Relativbewegung um die Drehachse (A) zu begrenzen.

16. Verfahren nach Anspruch 15,
wobei der Spielausgleichsschritt ferner definiert ist als das Ausgleichen des Spiels des Keils (44) mit Bezug auf die erste Welle (18) und die Schritte umfasst, dass:
ein Schlitz (58) in der ersten Welle (18) gleichzeitig mit dem Schritt des Bildens der Keilnut in der zweiten Welle (20) mit einem gemeinsamen Werkzeug gebildet wird;
der Keil (44) in dem Schlitz (58) und in der Keilnut (40) angeordnet wird; und
der Keil (44) an den Schlitz (58) geschweißt wird.

17. Verfahren nach Anspruch 15,
wobei der Spielausgleichsschritt ferner definiert ist als das Ausgleichen des Spiels des Keils (244) mit Bezug auf die erste Welle (218) und die Schritte umfasst, dass:
der Keil (244) mit Kunststoffmaterial und mit einer ersten Kunststoffscherrippe (266) gebildet wird;
der Keil (244) in einen Schlitz (276), der durch die erste Welle (218) gebildet ist, eingesetzt wird; und
zumindest ein Teil der ersten Kunststoffscherrippe (266) von dem Keil (244) während des Einsetzschrittes mit der ersten Welle (218) geschert wird.

18. Verfahren nach Anspruch 15,
wobei der Spielausgleichsschritt ferner definiert ist als das Ausgleichen des Spiels des Keils (244) mit Bezug auf die Keilnut (240) und die Schritte umfasst, dass:
der Keil (244) mit Kunststoffmaterial und mit einer zweiten Kunststoffscherrippe (268), die eine Rampe (278) aufweist, gebildet wird;
die Keilnut (240) mit einer Öffnung (280) gebildet wird, die eine erste und zweite Seite (282, 284) und eine Schneidekante (286) an der ersten Seite (282) aufweist;
die Schneidekante (286) an der Rampe (278) zum Einsetzen des Keils (244) in die Keilnut (240) angeordnet wird;
zumindest eine von der ersten Welle (218) und der zweiten Welle (220) relativ zu der anderen entlang der Drehachse (A) bewegt wird;
die Schneidekante (286) während des Bewegungsschrittes die Rampe (278) hinauf gelenkt wird, um den Keil (244) gegen die zweite Seite (284) der Keilnut (240) zu drängen; und
zumindest ein Teil der zweiten Kunststoffscherrippe (268) von dem Keil (244) mit der Schneidekante (286) während des Bewegungsschrittes und nach dem Lenkungsschritt geschert wird.

19. Verfahren nach Anspruch 14, das ferner den Schritt umfasst, dass:
die relative Ineinanderschiebebewegung in erste und zweite Bereiche einer Ineinanderschiebebewegung mit einer Begrenzungsvorrichtung (56) unterteilt wird, die radial zwischen der ersten Welle (18, 118) und der zweiten Welle (20, 120) mit Bezug auf die Drehachse (A) angeordnet wird, wobei der erste Bereich einem Einstellen einer Ineinanderschiebebewegung entspricht, und der zweite Bereich einer Kollabierbewegung entspricht.

## Revendications

1. Ensemble formant colonne de direction (16, 116), comprenant :
un premier arbre (18, 118, 218) s'étendant le long d'un axe (A) de rotation et destiné à être relié soit à un volant de direction (14) soit à un organe de direction d'un véhicule (12),
un second arbre (20, 120, 220) s'étendant le long dudit axe (A) de rotation et destiné à être relié à l'autre parmi le volant de direction (14) et l'organe de direction du véhicule (12), de sorte que ledit premier arbre (18, 118, 218) et ledit second arbre (20, 120, 220) se chevauchent au moins partiellement l'un l'autre le long dudit axe (A) de rotation pour un mouvement relatif télescopique ;
un passage de clavette (40, 140, 240) formé dans un arbre parmi ledit premier arbre (18, 118, 218) et ledit second arbre (20, 120, 220) et s'étendant le long dudit axe (A) de rotation en étant éloigné de celui-ci ; et
une clavette (44, 144, 244), de sorte que ladite clavette (44, 144, 244) et ledit passage de clavette (40, 140, 240) coopèrent pour coupler ledit premier arbre (18, 118, 218) avec ledit second arbre (20, 120, 220) pour une rotation simultanée et pour un mouvement télescopique le long dudit axe (A) de rotation ;
**caractérisé en ce que**
la clavette (44, 144, 244) est reliée à l'autre arbre parmi ledit premier arbre (18, 118, 218) et ledit second arbre (20, 120, 220) et est positionnée en coulissement dans ledit passage de clavette (40, 140, 240).

2. Ensemble formant colonne de direction (16, 116) selon la revendication 1, comprenant en outre :
un premier dispositif de découplage (162, 262, 264) disposé fonctionnellement pour limiter un mouvement relatif entre ladite clavette (44, 144, 244) et un élément parmi ledit passage de clavette (40, 140, 240), ledit premier arbre (18, 118, 218) et ledit second arbre (20, 120, 220) autour dudit axe (A) de rotation.

3. Ensemble formant colonne de direction (16, 116) selon la revendication 2, dans lequel ledit premier dispositif de découplage (162, 262, 264) limite un mouvement relatif entre ladite clavette (44, 144, 244) et ledit second arbre (20, 120, 220) autour dudit axe (A) de rotation et est un ressort (150) disposé directement entre ladite clavette (44, 144, 244) et ledit second arbre (20, 120, 220) et forçant une portion de ladite clavette (44, 144, 244) et une portion dudit second arbre (20, 120, 220) en écartement.

4. Ensemble formant colonne de direction selon la revendication 2, dans lequel ledit premier dispositif de découplage (262) limite un mouvement relatif entre ladite clavette (244) et ledit premier arbre (218) autour dudit axe (A) de rotation et est une nervure de cisaillement en matière plastique (266) au moins partiellement cisaillée depuis ladite clavette (244) par ledit premier arbre (218) lors de l'insertion de la clavette (244) dans une fente (276) dans le premier arbre (218).

5. Ensemble formant colonne de direction selon la revendication 2, dans lequel ledit premier dispositif de découplage (264) limite un mouvement relatif entre ladite clavette (244) et ledit passage de clavette (240) autour dudit axe (A) de rotation et est une nervure de cisaillement en matière plastique (268) au moins partiellement cisaillée depuis ladite clavette (244) par ledit passage de clavette (240) lors de l'insertion de la clavette (244) dans le passage de clavette (240).

6. Ensemble formant colonne de direction selon la revendication 2, comprenant en outre :
un second dispositif de découplage (262, 264) fonctionnellement disposé pour limiter un mouvement relatif entre ladite clavette (244) et un autre élément parmi ledit passage de clavette (240), ledit premier arbre (218), et ledit second arbre (220) autour dudit axe (A) de rotation.

7. Ensemble formant colonne de direction selon la revendication 6, dans lequel ledit premier dispositif de découplage (262) limite un mouvement relatif entre ladite clavette (244) et ledit premier arbre (218) autour dudit axe (A) de rotation et est une première nervure de cisaillement en matière plastique (266) au moins partiellement cisaillée depuis ladite clavette (244) par ledit premier arbre (218) lors de l'insertion de la clavette (244) dans une fente (276) dans le premier arbre (218).

8. Ensemble formant colonne de direction selon la revendication 7, dans lequel ledit second dispositif de découplage (264) limite un mouvement relatif entre ladite clavette (244) et ledit passage de clavette (244) autour dudit axe (A) de rotation et est une seconde nervure de cisaillement en matière plastique (268) au moins partiellement cisaillée depuis ladite clavette (244) par ledit passage de clavette (240) lors de l'insertion de la clavette (244) dans le passage de clavette (240).

9. Ensemble formant colonne de direction selon la revendication 6, dans lequel ledit premier dispositif de découplage (262) et ledit second dispositif de découplage (264) sont formés intégralement avec ladite clavette (244).

10. Ensemble formant colonne de direction (16, 116) selon la revendication 1, comprenant en outre :
un dispositif limiteur (56) fonctionnellement disposé pour limiter un mouvement télescopique relatif entre ledit premier arbre (18, 118, 218) et ledit second arbre (20, 120, 220).

11. Ensemble formant colonne de direction (16, 116) selon la revendication 10, dans lequel ledit dispositif limiteur (56) comprend en outre :
une tête de guidage (32) disposée radialement entre ledit premier arbre (18, 118) et ledit second arbre (20, 120) par rapport audit axe (A) de rotation et reliée de façon libérable à l'un parmi ledit premier arbre (18, 118) et ledit second arbre (20, 120).

12. Ensemble formant colonne de direction (16, 116) selon la revendication 11, dans lequel ladite tête de guidage (32) est en outre définie comme étant reliée de façon libérable audit second arbre (20, 120) et ledit dispositif limiteur (56) comprend en outre :
un orifice d'injection (34) qui s'étend à travers ladite tête de guidage (32) ;
une gorge annulaire (36) formée autour dudit second arbre (20, 120) et alignée avec ledit orifice d'injection (34) ; et
un élément de blocage (54) formé en matière plastique et formé in situ dans ledit orifice d'injection (34) et ladite gorge annulaire (36).

13. Ensemble formant colonne de direction (16, 116) selon la revendication 12, dans lequel ladite gorge annulaire (36) inclut une première et une seconde portion arquée (70, 72) et au moins une portion droite (74) disposée entre ladite première et ladite seconde portion arquée (70, 72).

14. Procédé pour former un ensemble formant colonne de direction (16, 116), comprenant les étapes consistant à :
disposer un premier arbre (18, 118, 218) pour qu'il s'étende le long d'un axe (A) de rotation et destiné à être relié à un élément parmi un volant de direction (14) et un organe de direction d'un véhicule (12) ;
disposer un second arbre (20, 120, 220) pour qu'il s'étende le long de l'axe (A) de rotation et destiné à être relié à l'autre élément parmi le volant de direction (14) et l'organe de direction du véhicule (12), de sorte que le premier arbre (18, 118, 218) et le second arbre (20, 120, 220) se chevauchent au moins partiellement l'un l'autre le long de l'axe (A) de rotation pour un mouvement relatif télescopique ;
former un passage de clavette (40, 140, 240) qui s'étend le long de l'axe (A) de rotation, en étant espacé de celui-ci, dans un arbre parmi le premier arbre (18, 118, 218) et le second arbre (20, 120, 220) ; et
relier une clavette (44, 144, 244) positionnée en coulissement dans le passage de clavette (40, 140, 240) de l'autre arbre parmi le premier arbre (18, 118, 218) et le second arbre (20, 120, 220) de sorte que la clavette (44, 144, 244) et le passage de clavette (40, 140, 240) coopèrent pour coupler le premier arbre (18, 118, 218) avec le second arbre (20, 120, 220) pour une rotation simultanée et pour un mouvement télescopique le long de l'axe (A) de rotation.

15. Procédé selon la revendication 14, comprenant en outre l'étape consistant à :
découpler la clavette (44, 144, 244) par rapport à un élément parmi le passage de clavette (40, 140, 240), le premier arbre (18, 118, 218) et le second arbre (20, 120, 220) pour limiter un mouvement relatif autour de l'axe (A) de rotation.

16. Procédé selon la revendication 15, dans lequel ladite étape de découplage est en outre définie comme un découplage de la clavette (44) par rapport au premier arbre (18) et comprend les étapes consistant à :
former une fente (58) dans ledit premier arbre (18) simultanément avec ladite étape de formation du passage de clavette dans le second arbre (20) avec un outil commun ;
positionner la clavette (44) dans la fente (58) et dans le passage de clavette (40) ; et
souder la clavette (44) dans la fente (58).

17. Procédé selon la revendication 15, dans lequel ladite étape de découplage est en outre définie comme un découplage de la clavette (244) par rapport au premier arbre (218) et comprend les étapes consistant à :
former la clavette (244) avec une matière plastique et avec une première nervure de cisaillement en matière plastique (266) ;
insérer la clavette (244) dans une fente (276) formée par le premier arbre (218) ; et
cisailler au moins une partie de la première nervure de cisaillement en matière plastique (266) depuis la clavette (244) pendant ladite étape d'insertion avec le premier arbre (218).

18. Procédé selon la revendication 15, dans lequel ladite étape de découplage est en outre définie comme un découplage de la clavette (244) par rapport au passage de clavette (240) et comprend les étapes consistant à :
former la clavette (244) avec une matière plastique et avec une seconde nervure de cisaillement en matière plastique (268) ayant une rampe (278) ;
former le passage de clavette (240) avec une ouverture (280) ayant un premier et un second côté (282, 284) et un bord de coupe (286) sur le premier côté (282) ;
positionner le bord de coupe (286) sur la rampe (278) pour insérer la clavette (244) dans le passage de clavette (240) ;
déplacer un arbre au moins parmi le premier arbre (218) et le second arbre (220) par rapport à l'autre le long dudit axe (A) de rotation ;
diriger le bord de coupe (286) en montant la rampe (278) pendant ladite étape de déplacement pour forcer la clavette (244) contre le second côté (284) du passage de clavette (240) ; et
cisailler au moins une partie de la seconde nervure de cisaillement en matière plastique (268) depuis la clavette (244) avec le bord de coupe (286) pendant ladite étape de déplacement et après ladite étape consistant à diriger.

19. Procédé selon la revendication 14, comprenant en outre l'étape consistant à :
diviser le mouvement télescopique relatif en une première et une seconde plage de mouvement télescopique avec un dispositif limiteur (56) disposé radialement entre le premier arbre (18, 118) et le second arbre (20, 120) par rapport à l'axe (A) de rotation, dans lesquelles la première plage correspond à un mouvement télescopique d'ajustement et la seconde plage correspond à un mouvement d'escamotage.
